# EUROPÄISCHE PATENTANMELDUNG

(11) **EP 2 050 982 A2**
(43) Veröffentlichungstag der Anmeldung: **22.04.2009**
(21) Anmeldenummer: 08165884.1
(22) Anmeldetag: 06.10.2008
(51) Int. Cl.: F16F 9/504, F16F 7/104

(54) **Schwingungsdämpfer**

(30) Priorität: 16.10.2007 DE 102007049444
(71) Anmelder: ZF Friedrichshafen AG, 88038 Friedrichshafen (DE)
(72) Erfinder: Kruse, Alexander, 97440 Werneck (DE); Starobinski, Rudolf, 22301 Hamburg (DE)

(57) **Zusammenfassung**

Schwingungsdämpfer (1), umfassend einen mit Dämpfmedium gefüllten Zylinder (3) als eine erste Hauptkomponente, in dem eine Kolbenstange (5) mit einem starr befestigten Kolben (7) als eine zweite Hauptkomponente axial beweglich angeordnet ist, wobei der Kolben den Zylinder in zwei Arbeitsräume (9,11) unterteilt und die beiden Arbeitsräume an mindestens eine Dämpfeinrichtung (13,15,17,19) angeschlossen sind, die bei einer Relativbewegung der Kolbenstange zum Zylinder von Dämpfmedium durchströmt wird und eine Dämpfkraft erzeugt, die auf den Zylinder und die Kolbenstange wirkt, wobei an mindestens einer der beiden Hauptkomponenten eine schwingend gelagerte Tilgermasse (25) befestigt ist.

## Beschreibung

Die Erfindung betrifft einen Schwingungsdämpfer gemäß dem Oberbegriff von Patentanspruch 1.

Bei einem Schwingungsdämpfer wird ein beliebiges Dämpfmedium durch eine Dämpfeinrichtung verdrängt. Die aufgrund der Dämpfwirkung entstehende Dämpfkraft wirkt auf eine Kolbenstange und einen Zylinder des Schwingungsdämpfers. Der plötzliche Dämpfkraftanstieg versetzt z. B. die Kolbenstange in hochfrequente Schwingungen, die in einer Fahrzeugkarosserie als störendes Geräusch wahrgenommen werden. Eine Maßnahme zur Abhilfe kann z. B. darin gesehen werden, die Anbindung des Schwingungsdämpfers an der Karosserie zu verändern, doch sind damit z. B. Komfortnachteile verbunden. Ähnlich verhält es sich mit der Ausgestaltung der Dämpfeinrichtung, um einen moderaten Dämpfkraftanstieg zu erreichen. Auch hier stehen angestrebte Dämpfkraftkennlinie und geräuschoptimierte Dämpfeinrichtung in einem Zielkonflikt.

Die Aufgabe der vorliegenden Erfindung besteht darin, den o. g. Zielkonflikt zu beheben.

Erfindungsgemäß wird die Aufgabe dadurch gelöst, dass an mindestens einer der beiden Hauptkomponenten eine schwingend gelagerte Tilgermasse befestigt ist.

Die Tilgermasse wirkt hochfrequenten Anregungen entgegen, ohne dass die Dämpfkraftkennlinie der Dämpfeinrichtung besonders angepasst werden muss. Damit bestehen getrennte Einstellmöglichkeiten für die gewünschte Dämpfkraftkennlinie und zur Dimensionierung der Tilgermasse, um ein optimiertes Geräuschverhalten des Schwingungsdämpfers zu erreichen.

Dabei ist vorgesehen, dass die Tilgermasse in einem Gehäuse angeordnet und von einem Elastomer zum Gehäuse abgestützt wird. Das Gehäuse stellt eine separat herstellbare und applizierbare Baueinheit dar.

Zur Reduzierung von mehreren ein Geräusch verursachende Anregungen besteht die Tilgermasse aus verschiedenen Einzeltilgermassen. Eine Tilgermasse steht für eine Anregung zur Verfügung.

In weiterer vorteilhafter Ausgestaltung stützt sich das Elastomer die Tilgermasse richtungsabhängig ab. Ein Schwingungsdämpfer ist nicht nur Axial- sondern auch Querkräften ausgesetzt, die Geräusche verursachen können. Entsprechend kann man die Tilgermasse richtungsabhängig elastisch lagern.

Zusätzlich zu einer Elastomerlagerung, die eine Eigendämpfung aufweist, kann die Tilgermasse in einem Dämpfmedium gelagert sein und mindestens Drossel eine Dämpfkraft erzeugen. Diese Variante ermöglicht eine besonders präzise akustische Abstimmung der Tilgermasse.

Neben der konstruktiven Ausgestaltung der Tilgermasse bestehen verschiedene Ausführungsvarianten hinsichtlich der Verbindung Tilgermasse bzw. Gehäuse mit einer der Hauptkomponenten. So kann das Gehäuse von einer hohl ausgeführten Kolbenstange gebildet werden.

Alternativ besteht die Möglichkeit, dass das Gehäuse an einem Kolbenstangenzapfen befestigt ist. Diese Variante eignet sich besonders gut für die Kombination mit einem Standard-Schwingungsdämpfer.

Eine weitere Version zeichnet sich dadurch aus, dass die Kolbenstange von einem Schutzrohr zumindest teilweise eingehüllt und das Gehäuse für die Tilgermasse von dem Schutzrohr gebildet wird.

Bei besonders kurzen Schwingungsdämpfern besteht auch die Möglichkeit, dass das Gehäuse für die Tilgermasse als Teil eines Stiftgelenks ausgeführt ist. Bei allen genannten Varianten wird davon ausgegangen, dass die Kolbenstange mit dem zu tragenden Bauelement, z. B. einer Fahrzeugkarosserie verbunden ist.

Anhand der folgenden Figurenbeschreibung soll die Erfindung näher erläutert werden.

Es zeigt:
- Fig. 1: Schwingungsdämpfer mit Tilgermassen in einer hohlen Kolbenstange
- Fig. 2: Tilgermasse mit Dämpfeinrichtung
- Fig. 3 -5: Varianten zur Befestigung der Tilgermasse

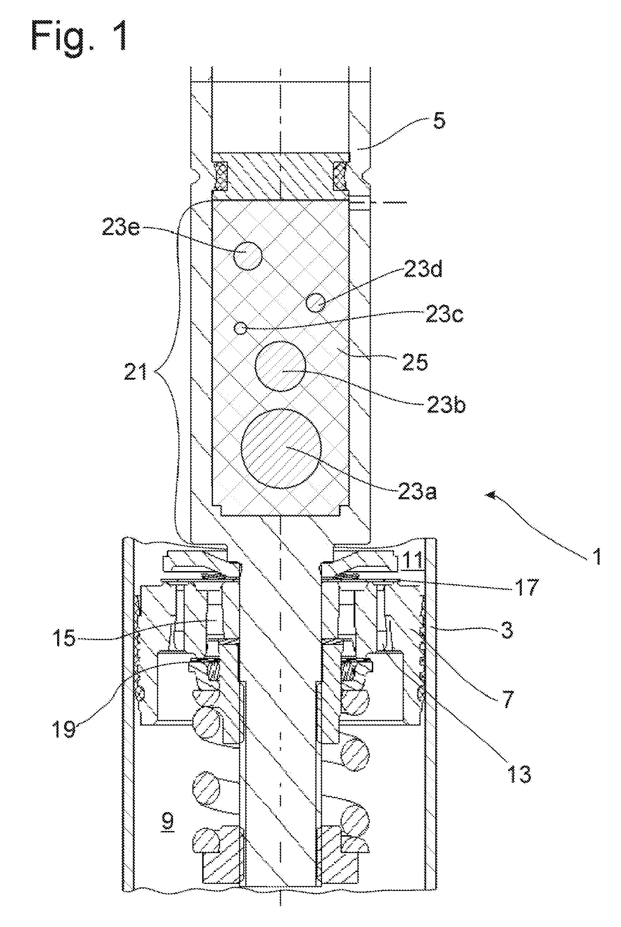

Die Fig. 1 zeigt einen Ausschnitt aus einem Schwingungsdämpfer 1. In einem Zylinder 3 als eine erste Hauptkomponente ist eine Kolbenstange 5 als zweite Hauptkomponente axial beweglich geführt. Der Schwingungsdämpfer ist beispielsweise zwischen einer Fahrzeugkarosserie und einem Fahrzeugrad angebunden. An der Kolbenstange 5 ist ein Kolben 7 fest angeschlossen, der den Zylinder 3 in zwei mit Dämpfmedium gefüllte Arbeitsräume 9; 11 unterteilt. Zwischen den beiden Arbeitsräumen 9; 11 bestehen Strömungsverbindungen 13; 15, die jeweils an ihren Austrittsöffnungen von Ventilscheiben 17; 19 zumindest teilweise verschlossen sind, wobei die Strömungsverbindungen und die Ventilscheiben Dämpfeinrichtungen bilden, so dass beide Arbeitsräume 9; 11 an eine Dämpfeinrichtung angeschlossen sind.

Die hohl ausgeführte Kolbenstange 5 bildet auf einem Längenabschnitt ein Gehäuse 21, in dem mindestens eine Masse 23ᵢ angeordnet ist. Jede Masse 23a - 23e verfügt über ein anderes Gewicht und kann sich relativ zur Kolbenstange und damit zu einer der beiden Hauptkomponenten axial und radial bewegen. Die Tilgermassen werden von einem Elastomer 25 zum Gehäuse federnd abgestützt, so dass die Tilgermassen eine Schwingbewegung ausführen können. Als Elastomer kommen z. B. Gummiwerkstoffe oder auch Silikon zur Anwendung. Jede Masse 23ᵢ ist auf eine bestimmte Anregung abgestimmt. Wie man deutlich erkennen kann, sind die Massen in Axial und Querrichtung mit einer unterschiedlichen Elastomerzwischenschichten zum Gehäuse ausgeführt, so dass Axial- und Radialanregungen unterschiedliche Schwingungen der Tilgermassen hervorrufen und entsprechenden Anregungen der Kolbenstange entgegenwirken.

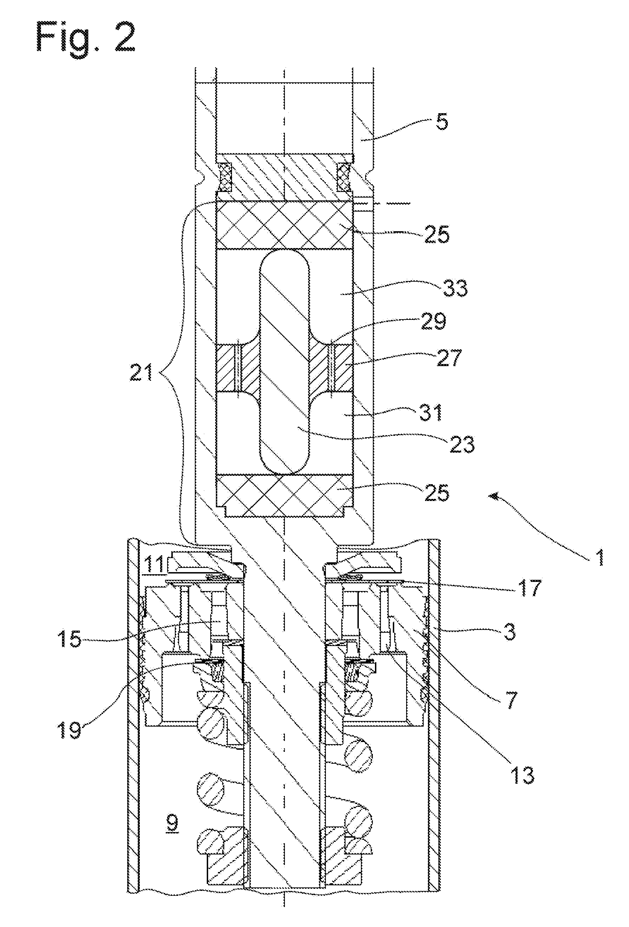

Die Fig. 2 zeigt einen im prinzipiellen Aufbau gleichartigen Schwingungsdämpfer 1 wie in der Fig. 1. Abweichend kommt eine Tilgermasse 23 zur Anwendung, die z. B. endseitig mittels einer Elastomerschicht 25 abgestützt wird. Zusätzlich sind in einem an der Tilgermasse 23 befestigten umlaufenden Ring 27 Drosseln 29 ausgeführt. Die Tilgermasse 23 ist in einem Dämpfmedium, z. B. Öl, innerhalb des Gehäuses 21 gelagert. Bei einer Schwingbewegung der Tilgermasse relativ zur Kolbenstange verschiebt sich die Tilgermasse und verdrängt Dämpfmedium durch die Drosseln 29 aus einem Ringraum 31 des Gehäuses 21 in den anderen Ringraum 33, so dass eine Dämpfkraft erzeugt wird. Damit steht neben der Größe der Tilgermasse 23, der Federrate der Elastomerschichten 25 mit der Drossel 29 noch eine weitere definierbare Größe zur Geräuschminimierung einer hochfrequenten Kolbenstangenbewegung zur Verfügung.

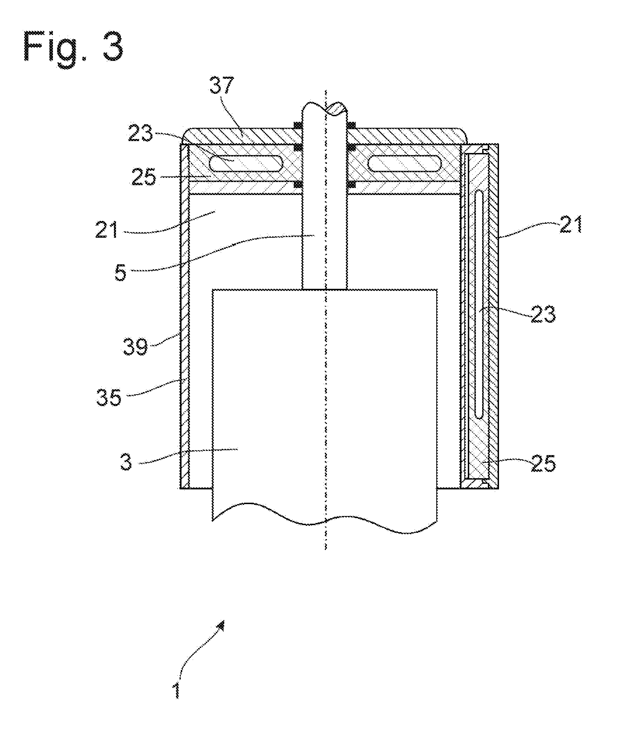

Die Figuren 3 bis 5 zeigen verschiedene Befestigungspunkte für eine Tilgermasse 23. Die meisten Schwingungsdämpfer 1 verfügen über ein Schutzrohr 35 für die Kolbenstange 5, wobei das Schutzrohr 35 fest mit der Kolbenstange verbunden ist. In oder an einem Boden 37 oder einem Rohrkörper 39 kann ein Gehäuse 21 integriert sein, in dem nach dem Prinzip der Fig. 1 eine Tilgermasse 23 in einer Elastomerschicht 25 eingebettet ist.

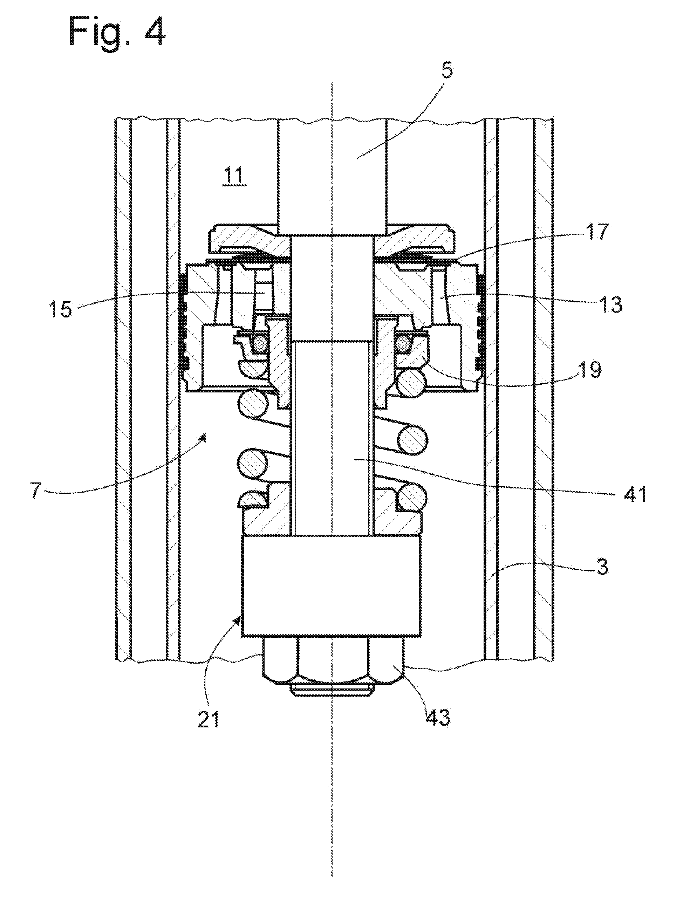

In der Figur 4 ist das Gehäuse 21 für die Tilgermasse 23 ortsfest an einem Kolbenstangenzapfen 41 fixiert, beispielsweise mittels einer Kolbenventilmutter 43. Diese Variante lässt sich mit einfachen Mitteln an einem bekannten Schwingungsdämpfer vorsehen, ohne dass tiefe konstruktive Eingriffe notwendig sind.

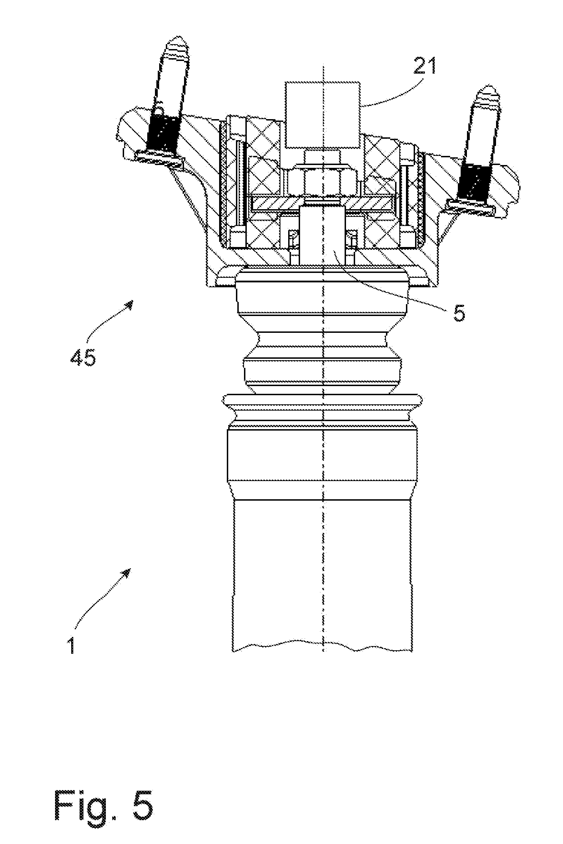

Mit der Fig. 5 soll dokumentiert werden, dass die Tilgermasse auch außerhalb des Schwingungsdämpfers 1 verwendet werden kann. In diesem Fall ist die Tilgermasse als Teil eines Stiftgelenks 45 an der Kolbenstange 5 ausgeführt. Eine derartige Konstruktion kann man ggf. sogar noch an einem fertigen Fahrzeug nachrüsten.

Bei allen Tilgermassen 23 wird folgender Effekt ausgenutzt. Die Kolbenstange 5 erzeugt zusammen mit den Strömungsverbindungen 13; 15 und den Ventilscheiben 17; 19 Dämpfkräfte, die auch auf die Kolbenstange 5 wirken. Insbesondere bei hochfrequenten Anregungen auf den Schwingungsdämpfer 1 wirken auch hochfrequente Abstützkräfte, hervorgerufen durch die Drosselwirkung der Dämpfeinrichtungen. Den hochfrequenten Schwingungen der Kolbenstange 5 wirken die Tilgermassen 23 mit ihren Trägheitskräften entgegen. Die Rückstellung der Tilgermasse erfolgt durch das Elastomer 25. Schon sehr kleine Massen erzeugen ausreichend große Gegenkräfte zu den auf die Kolbenstange 5 wirkenden Dämpfkräften, so dass die Schwingbewegung der Kolbenstange minimiert werden oder auf einen Frequenzbereich reduziert werden kann, der für das menschliche Gehör keine vernehmbaren Geräusche hervorruft. Selbstverständlich muss die Dämpfeinrichtung nicht unbedingt n der Kolbenstange 5 fixiert sein, sondern kann an beliebiger Stelle zumindest mit den beiden Arbeitsräumen 9; 11 verbunden sein.

## Patentansprüche

1. Schwingungsdämpfer (1), umfassend einen mit Dämpfmedium gefüllten Zylinder (3) als eine erste Hauptkomponente, in dem eine Kolbenstange (5) mit einem starr befestigten Kolben (7) als eine zweite Hauptkomponente axial beweglich angeordnet ist, wobei der Kolben (7) den Zylinder (3) in zwei Arbeitsräume (9; 11) unterteilt und die beiden Arbeitsräume (9; 11) an mindestens eine Dämpfeinrichtung (13; 15; 17; 19) angeschlossen sind, die bei einer Relativbewegung der Kolbenstange (5) zum Zylinder (3) von Dämpfmedium durchströmt wird und eine Dämpfkraft erzeugt, die auf den Zylinder (3) und die Kolbenstange (5) wirkt,
**dadurch gekennzeichnet,**
**dass** an mindestens einer der beiden Hauptkomponenten (3; 5) eine schwingend gelagerte Tilgermasse (25) befestigt ist.

2. Schwingungsdämpfer nach Anspruch 1,
**dadurch gekennzeichnet,**
**dass** die Tilgermasse (23) in einem Gehäuse (21) angeordnet und von einem Elastomer (25) zum Gehäuse (21) abgestützt wird.

3. Schwingungsdämpfer nach Anspruch 1,
**dadurch gekennzeichnet,**
**dass** die Tilgermasse (23) aus verschiedenen Einzeltilgermassen (23a - 25e) besteht.

4. Schwingungsdämpfer nach Anspruch 2,
**dadurch gekennzeichnet,**
**dass** das Elastomer (25) die Tilgermasse (23) richtungsabhängig abstützt.

5. Schwingungsdämpfer nach Anspruch 1,
**dadurch gekennzeichnet,**
**dass** die Tilgermasse (23) in einem Dämpfmedium gelagert ist und mindestens Drossel (29) eine Dämpfkraft erzeugt.

6. Schwingungsdämpfer nach Anspruch 2,
**dadurch gekennzeichnet,**
**dass** das Gehäuse (21) von einer hohl ausgeführten Kolbenstange (5) gebildet wird.

7. Schwingungsdämpfer nach Anspruch 2,
**dadurch gekennzeichnet,**
**dass** das Gehäuse (21) an einem Kolbenstangenzapfen (41) befestigt ist.

8. Schwingungsdämpfer nach Anspruch 2,
**dadurch gekennzeichnet,**
**dass** die Kolbenstange von einem Schutzrohr (39) zumindest teilweise eingehüllt wird und das Gehäuse (21) für die Tilgermasse (23) von dem Schutzrohr (39) gebildet wird.

9. Schwingungsdämpfer nach Anspruch 2,
**dadurch gekennzeichnet,**
**dass** das Gehäuse (21) für die Tilgermasse (23) als Teil eines Stiftgelenks (45) ausgeführt ist.
